# EUROPÄISCHE PATENTSCHRIFT

(11) **EP 2 011 761 B1**
(45) Veröffentlichungstag und Bekanntmachung des Hinweises auf die Patenterteilung: **02.01.2013**
(21) Anmeldenummer: 08011940.7
(22) Anmeldetag: 02.07.2008
(51) Int. Cl.: B66F 9/075, B60K 1/04, B60S 5/06, B60L 11/18

(54) **Flurförderzeug, insbesondere Gabelstapler**
Industrial truck, in particular forklift
Chariot de manutention, en particulier empileuse à fourche

(30) Priorität: 05.07.2007 DE 102007031149
(43) Veröffentlichungstag der Anmeldung: 07.01.2009
(73) Patentinhaber: Jungheinrich Aktiengesellschaft, 22047 Hamburg (DE)
(72) Erfinder: Bögelein, Rolf, 74564 Crailsheim (DE); Hatzl, Franz, 84098 Hohenthann (DE); Plastinin, Oleg, 84028 Landshut (DE); Werner, Ralf, 84036 Landshut (DE); Zeidler, Christoph, 84032 Landshut (DE)
(74) Vertreter: Tiesmeyer, Johannes

(56) Entgegenhaltungen:
- EP-A- 1 661 847
- EP-A- 1 925 588
- DE-A1- 19 956 623
- DE-A1-102005 025 647
- DE-A1-102006 033 526
- DE-A1-102006 050 431
- DE-A1-102006 060 325

## Beschreibung

Die Erfindung betrifft ein Flurförderzeug, insbesondere Gabelstapler, mit einem auswechselbaren Batterieblock und einem den Batterieblock aufnehmenden Batteriefach, wobei das Batteriefach mindestens eine seitliche Zugriffsöffnung zum Einschieben des Batterieblocks mit einem ersten Ende voraus in das Batteriefach und zum Herausziehen des Batterieblocks mit seinem ersten Ende hintan aus dem Batteriefach aufweist.

Derartige elektromotorisch angetriebene und aus einem Batterieblock mit Energie gespeiste Flurförderzeuge mit einem seitlich zugänglichen Batteriefach für den Batteriewechsel sind in diversen Varianten bekannt.

Da ein Batterieblock der hier betrachteten Art ein relativ großes Gewicht und ein relativ großes Volumen hat, sind zum Auswechseln des Batterieblocks Transporthilfsmittel erforderlich. Dies sollten aus Kostengründen möglichst Standard-Transporthilfsmittel sein, wie etwa Handgabelhubwagen oder ggf. Gabelstapler, mit denen man den Batterieblock auf Gabelzinken transportieren kann. Ein Problem hierbei liegt jedoch darin, dass in dem Batteriefach an der Unterseite des Batterieblocks nicht genug Platz ist, um Gabelzinken eines solchen Transportgerätes einzuführen und den Batterieblock auf die Gabelzinken aufzunehmen. Es sind bereits Lösungen bekannt, bei denen der Batteriefachboden von der seitlichen Zugriffsöffnung her tief eingeschnitten ist, so dass im Wesentlichen nur schmale Bodenseitenstreifen verbleiben, auf denen der Batterieblock aufsteht. Ein solcher Batterieblock kann dann auf einfache Weise mit unter das Flurförderzeug in Ausrichtung zu einem solchen Einschnitt geschobenen Gabelzinken eines Gabelhubwagens untergriffen und dann mittels der Gabelzinken angehoben und durch Zurückziehen des Gabelhubwagens aus dem Batteriefach heraus transportiert werden. Ebenso einfach kann ein Batterieblock mit entsprechend umgekehrten Bewegungsabläufen unter Verwendung eines Gabelhubwagens in das Batteriefach mit offenem Batteriefachboden eingeschoben werden. Ein solches Flurförderzeug ist z. B. in der EP 1 411 020 B1 beschrieben. Der relativ große Einschnitt in dem Batteriefachboden bedeutet jedoch auch eine erhebliche Schwächung der Rahmenstabilität des Fahrzeugs, was sich durch Rahmenverzug beim Batterieblockwechsel zeigt und nicht mit einfachen Mitteln kompensiert werden kann.

Aus der DE 10 2005 025 647 A1 ist ein Flurförderzeug mit einer seitlich aus einem Batteriefach entnehmbaren Batterie, die mittels einer Trägerplatte auf dem Batteriefachboden abgestützt ist, bekannt. Bei diesem Flurförderzeug ist ein sehr spezielles Batterietransportgerät als integrierter Unterbau der Trägerplatte vorgesehen. Dieses stets an der Trägerplatte des Batterieblocks mitgeführte spezielle Batterietransportgerät umfasst eine Art Scheren-Spindelantrieb zum Absenken und Abheben zweier in Batterieauszugsrichtung hintereinander angeordneter Laufrollen, die zur Batterieentnahme durch Betätigung des Scheren-Spindelantriebs mittels einer Handkurbel auf den Fahrbahnboden abzusenken sind. Der nur noch auf dem Spezialbatterietransportgerät und dessen Trägerplatte abgestützte Batterieblock kann durch Bewegung des Spezialbatterietransportgerätes aus dem Batteriefach herausbewegt werden. Dabei rollen die Laufrollen auf der Fahrbahnoberfläche ab. Damit ein Batteriewechsel wie oben beschrieben überhaupt funktionieren kann, ist ebenfalls ein tiefer, weit in das Batteriefach reichender Ausschnitt des Batteriefachbodens erforderlich, wobei die Länge dieses Ausschnitts von der Batteriefachöffnungsseite her gemessen in etwa der kompleten Länge der Spindel des Scheren-Spindelantriebs entspricht. Ein derart großer Ausschnitt im Batteriefachboden schwächt die Rahmenstabilität des Flurförderzeugs.

Aus der EP 1 661 847 A1 ist ein Flurförderzeug mit einem innerhalb eines Fahrzeugrahmens angeordneten Batterieblock bekannt. Dabei weist das Flurförderzeug eine in horizontaler Richtung bewegbare, an dem Fahrzeugrahmen teleskopartig auf Rollenträgern geführte Platte als Aufstandsfläche für den Batterieblock auf. Ein Batteriewechsel gemäß dieser Anordnung funktioniert ebenfalls nur mit einem tief ausgeschnittenen Batteriefachboden.

Aus der DE 199 56 623 A1 ist ein Flurförderzeug mit einer Batterie und einem Batterieaufnahmeraum bekannt, wobei die Batterie an gegenüberliegenden Außenseiten Rollen aufweist, die mit Schienen an Seitenwänden des Batterieaufnahmeraumes des Flurförderzeugs beim Herausschieben und Einschieben der Batterie zusammenwirken. Das Batteriefach ist unten offen.

Der Erfindung liegt die Aufgabe zugrunde, ein Flurförderzeug der eingangs genannten Art bereitzustellen, welches einen Batterieblockwechsel auf einfache Weise mit einem Standardbatterietransportgerät, etwa einem Handgabelhubwagen oder dgl., ermöglicht und dennoch ein platzoptimiertes Batteriefach mit einem stabilen Batteriefachrahmen aufweist.

Zur Lösung dieser Aufgabe wird erfindungsgemäß vorgeschlagen, ein Flurförderzeug der eingangs genannten Art dahingehend auszugestalten, dass der im Batteriefach aufgenommene Batterieblock in der Nähe seines ersten Endes mit wenigstens einem Rollkörper oder ggf. Gleitkörper auf dem Batteriefachboden abstützbar ist, derart, dass er unter Beibehaltung dieser Abstützung beim Herausziehen aus dem Batteriefach in Auszugsrichtung verschiebbar ist, und dass ein von dem Batterieblock an dessen dem ersten Ende entgegengesetzten zweiten Ende über einen nahe der Zugriffsöffnung liegenden vorderen Randabschnitt des Batteriefachbodens hinweg und über die Unterseite des Batteriefachbodens hinaus nach unten abstehender Vorsprung als Hubanschlag für ein Batterietransportgerät, insbesondere Gabelhubgerät, zum Wechseln des Batterieblocks vorgesehen ist.

Die erfindungsgemäße Lösung ermöglicht folgende Vorgehensweise beim Wechseln des Batterieblocks: Ein Handgabelhubwagen wird mit seinen Gabelzinken unter das Flurförderzeug geschoben, so dass die Gabelzinken durch Anheben den nach unten abstehenden Hubanschlag des Batterieblocks untergreifen und schließlich den Batterieblock an dessen zweitem Ende so weit anheben können, dass dieser auf dem Batteriefachboden nur noch mit dem Rollkörper aufsteht. Ein Zurückziehen des Gabelhubwagens führt dann zum Herausrollen des Batterieblocks aus dem Batteriefach, bis schließlich die Gabelzinken den Batterieblock vollständig aufnehmen können. Der Batterieblock kann dann mit dem Gabelhubwagen vom Flurförderzeug entfernt werden. Das Einbringen des Batterieblocks in das Batteriefach des Flurförderzeugs kann mit entsprechend umgekehrten Bewegungsabläufen des Gabelhubwagens erfolgen. Anstelle eines Gabelhubwagens kann z.B. auch ein Staplerfahrzeug als Batterietransportgerät verwendet werden. Anstelle eines oder mehrerer Rollkörper könnten in einer weniger bevorzugten Ausführungsform der Erfindung ein oder mehrere Gleitkörper vorgesehen sein.

Gemäß einer Weiterbildung der Erfindung ist ein den Batterieblock tragender und gemeinsam mit dem Batterieblock aus dem Batteriefach entfernbarer bzw. gemeinsam mit dem Batterieblock in das Batteriefach einschiebbarer Schubrahmen oder Wagen vorgesehen, der den Rollkörper und den Hubanschlag aufweist. Dies hat den Vorteil, dass Standardbatterieblöcke verwendet und auch als solche belassen werden können, da die Anpassungsmaßnahmen, nämlich das Vorsehen des Hubanschlags und des Rollkörpers an dem Schubrahmen vorgenommen worden sind. Es ist möglich, dass ein solcher Schubrahmen ein und demselben Batterieblock ständig zugeordnet bleibt. Denkbar ist es aber auch, das der Batterieblock außerhalb des Batteriefaches vom Schubrahmen bedarfsweise entfernbar ist, so dass der Schubrahmen ggf. zur Aufnahme eines frisch geladenen anderen Batterieblocks dienen und mit letzterem in das Batteriefach des Flurförderzeugs eingeschoben werden kann.

Gemäß einer anderen Ausführungsform der Erfindung sind der Rollkörper und der Hubanschlag unmittelbar am Batterieblockgehäuse angeordnet.

Vorzugsweise handelt es sich bei dem Hubanschlag um eine unterhalb des Batterieblocks verlaufende Leiste, die sich quer zur Batterieeinschubrichtung beim Einbringen des Batterieblockes in das Batteriefach erstreckt. Eine solche Hubanschlaggeometrie vereinfacht das Untergreifen des Hubanschlags mittels der Gabelzinken des Batterietransportgerätes ohne aufwändige Ausrichtungsoperationen des Batterietransportgerätes relativ zum Batteriefach.

Gemäß einer Weiterbildung der Erfindung hat der Batteriefachboden nahe der Zugriffsöffnung einen relativ kleinen Ausschnitt, der den vorderen Randabschnitt des Batteriefachbodens aufweist, so dass der den Hubanschlag für das Batterietransportgerät bildende Vorsprung bei in dem Batteriefach befindlichem Batterieblock durch den Ausschnitt hindurch nach unten über die Unterseite des Batteriefachbodens hinaus absteht. Ein solcher Ausschnitt kann im Wesentlichen den Dimensionen des Hubanschlags entsprechend klein ausgebildet werden, so dass eine Schwächung des Rahmenbodens und dessen mechanischer Stabilität nicht in nennenswertem Maße auftritt. Ein solcher kleiner Ausschnitt erleichtert die vollständige Aufnahme des Batterieblocks auf die Gabelzinken aus einer Stellung heraus, in der der Batterieblock noch mit seinem Rollenkörper auf dem Batteriefachboden aufsteht.

Vorzugsweise sind als Rollkörper wenigstens zwei Rollen für den Batterieblock an dessen erstem Ende mit seitlichem Abstand voneinander vorgesehen, wobei der Batteriefachboden in Batterieeinschubrichtung verlaufende Führungsbahnen für die Rollen aufweist. Bei der Ausführungsform mit Batteriefachbodenausschnitt der vorstehend erwähnten Art verläuft vorzugsweise je eine Führungsbahn an beiden Seiten des Ausschnitts.

Vorzugsweise haben die Führungsbahnen gegenüber dem Batteriefachboden erhabene Führungsprofile und die Rollen am Rollenumfang umlaufende konkave Führungsrillen, in welche die Führungsprofile der Führungsbahnen beim Einschieben des Batterieblocks in das Batteriefach und beim Herausziehen des Batterieblocks aus dem Batteriefach eingreifen. Eine solche Führungsanordnung stellt ein im Wesentlichen selbstreinigendes System dar, so dass keine Verschmutzungsablagerungen an führungsrelevanten Stellen in funktionsbeeinträchtigender Weise auftreten können.

Ferner wird vorgeschlagen, dass das Batteriefach seitliche Führungselemente für den Batterieblock aufweist. Dies sind vorzugsweise stationär gehaltene, drehbar gelagerte Rollen.

Zweckmäßigerweise hat das Batteriefach Anschlagmittel, die den Batterieblock beim Herausziehen aus dem Batteriefach stoppen, bevor der wenigstens eine Rollkörper beim Herausrollen den Batteriefachboden verlässt, wobei die Anschlagmittel durch weiteres Anheben und Herausziehen des Batterieblocks aus dem Batteriefach überwindbar sind. Die Anschlagmittel erleichtern das Aufnehmen des Batterieblocks auf die Gabelzinken des Batterietransportgerätes, wenn der Batterieblock schon weitgehend aus dem Batteriefach herausgezogen worden ist. Bei entsprechender Stellung der Gabelzinken relativ zum Batteriefachboden kann dann durch Anheben der Gabelzinken der Batterieblock vollständig von diesen untergriffen und so weit angehoben werden, dass er über die Anschlagmittel hinweg nach außen gezogen werden kann.

Ein Ausführungsbeispiel der Erfindung wird im Folgenden unter Bezugnahme auf die Figuren näher erläutert.
- Figur 1: zeigt ein Flurförderzeug ausschnittsweise in perspektivischer Darstellung mit Blick in das leere Batteriefach.
- Figur 2: zeigt das Flurförderzeug aus Fig. 1 in einer ähnlichen Darstellung mit einem Batterieblock im Batteriefach.
- Figuren 3-8: zeigen in einer schematischen Schnittdarstellung längs durch das Batteriefach mit der in Fig. 1 bei III angedeuteten Schnittebene verschiedene Momentaufnahmen beim Herausziehen eines Batterieblocks aus dem Batteriefach.
- Figuren 9-10: zeigen in einer schematischen Schnittdarstellung mit einem Schnitt entsprechend der in Fig. 1 bei III angedeuteten Schnittebene den Batterieblock in Ruhelage (Fig. 9) bzw. in angehobener Lage (Fig. 10).

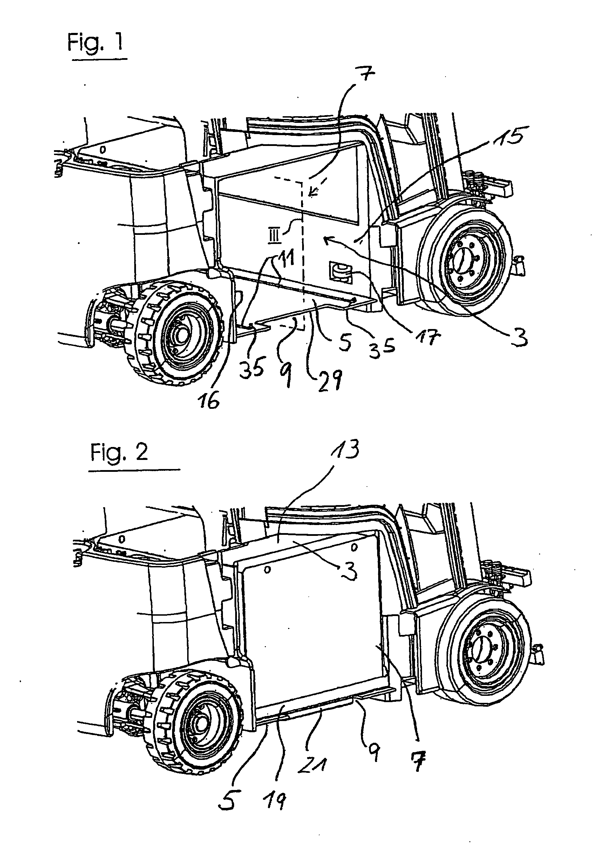

Bei dem in Fig. 1 nur in einem Abschnitt gezeigten Flurförderzeug ist das offene Batteriefach 3 erkennbar, das zur Aufnahme eines Batterieblocks dient. Eine in der Praxis vorhandene Verschlusstüre und einige Verkleidungselemente sind in den Figuren aus Vereinfachungsgründen nicht eingezeichnet worden.

In Fig. 1 ist der Batteriefachboden 5 mit einem von der Zugriffsöffnung 7 her ausgehenden kleinen Ausschnitt 9 erkennbar, der die Rahmenstabilität des Flurförderzeugs nicht nennenswert beeinträchtigt. Seitlich des Ausschnitts 9 verlaufen Führungsbahnen 11 in Gestalt von erhabenen Führungsprofilen. Auf diesen Führungsprofilen 11 können Laufrollen eines Batterieblocks 13, die ein komplementäres Rillenprofil haben, geführt abrollen, wenn der Batterieblock 13 in das Batteriefach 3 eingeschoben und aus diesem herausgezogen wird.

An den Batteriefachseitenwänden 15, 16 sind seitliche Führungselemente 17 in Gestalt von stationär gehaltenen, drehbar gelagerten Rollen vorgesehen, die auch dazu beitragen, dass ein Batterieblock 13 verkantungsfrei und reibungsarm in das Batteriefach 3 eingeschoben bzw. daraus herausgezogen werden kann.

Gemäß Fig. 2 ist ein Batterieblock 13 in dem Batteriefach 3 aufgenommen. Der Batterieblock 13 steht auf einem Schubrahmen 19, der an seinem der Zugriffsöffnung 7 des Batteriefachs 3 benachbarten Ende eine durch den Ausschnitt 9 hindurch nach unten über den unteren Rand des Batteriefachbodens 5 hinaus abstehende Leiste 21 aufweist. An dem von der Leiste 21 entfernten Ende des Schubrahmens 19 weist dieser zwei Laufrollen (in den Fig. 1 und 2 nicht erkennbar) auf, die an den Führungsbahnen 11 geführt sind.

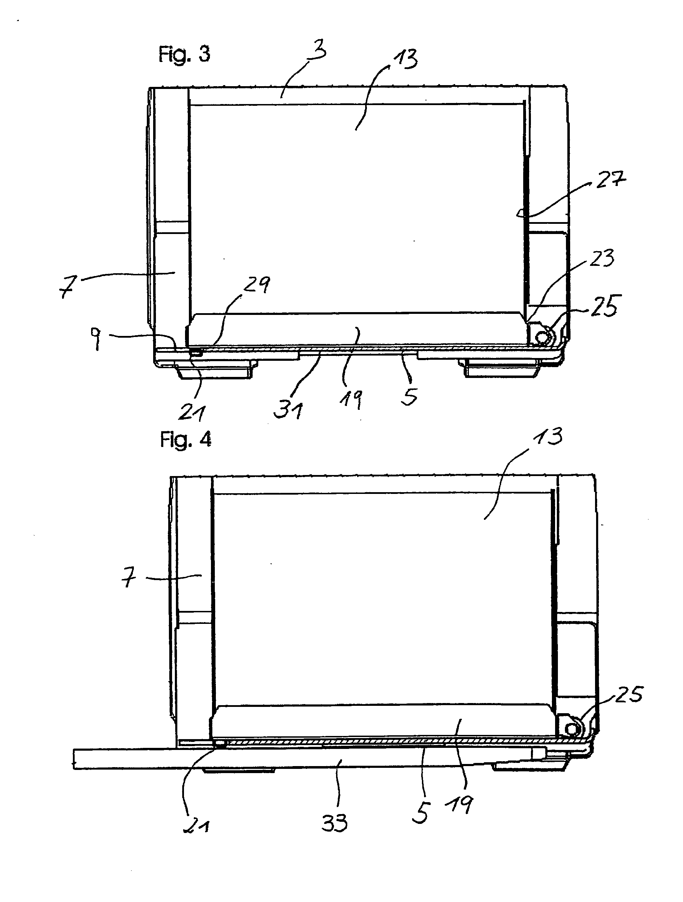

In Fig. 3 ist in einer Schnittdarstellung mit der in Fig. 1 bei lll, angedeuteten Schnittebene die Lage des Batterieblocks 13 innerhalb des Batteriefachs 3 erkennbar. Der als eine Art Wagen ausgebildete Schubrahmen 19 hat an seinem weit in das Batteriefach 3 eingeführten ersten Ende 23 die beiden Laufrollen 25. Im Beispielsfall sind die Laufrollen 25 noch hinter dem Rand 27 des Batterieblocks 13 positioniert. Sie stehen auf den Führungsbahnen (in den Fig. 3-8 nicht gezeigt) des Batteriefachbodens 5 auf. Fig. 3 läßt auch gut erkennen, dass der Schubrahmen 19 mit seiner Hubanschlagsleiste 21 über den nahe der Zugriffsöffnung 7 liegenden vorderen Randabschnitt 29 des Batteriefachbodens 5 hinweg im Bereich des Ausschnittes 9 über die Unterseite 31 des Batteriefachbodens 5 hinaus nach unten absteht. Unmittelbar neben der Hubanschlagsleiste liegt der Schubrahmen 19 auf dem Batteriefachboden 5 auf.

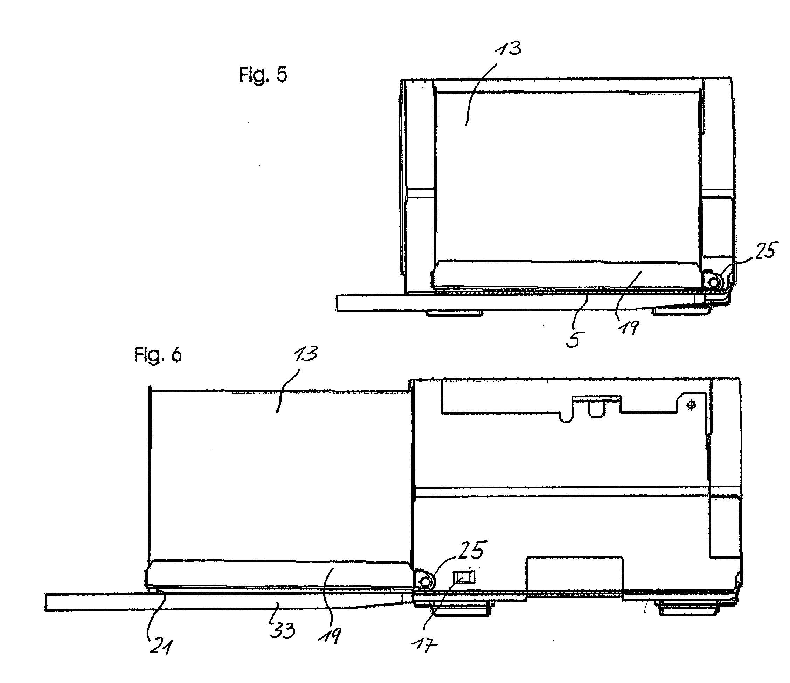

In Fig. 4 liegt der Batterieblock 13 noch in derselben Stellung im Batteriefach 3, wie dies auch in Fig. 3 gezeigt ist. Allerdings sind in Fig. 4 Gabelzinken 33 eines Handgabelhubwagens so unter dem Batteriefachboden 5 platziert worden, dass sie die Hubanschlagsleiste 21 von unten beaufschlagen können. Fig. 5 zeigt eine Momentaufnahme, in der die Gabelzinken 33 so weit angehoben sind, dass damit auch die Hubanschlagsleiste 21 und damit der Schubrahmen 19 mit dem Batterieblock 13 so weit angehoben ist, dass der Schubrahmen 19 nur noch mit seinen Rollen 25 am Batteriefachboden 5 abgestützt ist. Werden nun die Gabelzinken 33 zurückgezogen, wie dies in Fig. 6 erkennbar ist, so nehmen sie den Schubrahmen 19 und den darauf stehenden Batterieblock 13 nach außen mit. In der Situation gemäß Fig. 6 bildet der Batteriefachboden 5 schon keine Störkontur mehr für den Hub der Gabelzinken 33, wobei jedoch die Rollen 25 noch auf dem Batteriefachboden 5 aufstehen. Ein Anheben der Gabelzinken 33 kann somit erfolgen, um den Schubrahmen 19 und den darauf aufstehenden Batterieblock 13 vollständig auf die Gabelzinken 33 aufzunehmen. Dies kann auch schon geschehen, wenn die Gabelzinken 33 mit ihren vorderen Enden noch in dem Ausschnitt 9 liegen. Anschlagmittel, die in Fig. 1 bei 35 angedeutet sind, können vorgesehen sein, um zu verhindern, dass die Rollen 25 vor dem Anheben der Gabelzinken 33 aus der in Fig. 6 gezeigten Situation heraus vom Batteriefachboden 5 freikommen können.

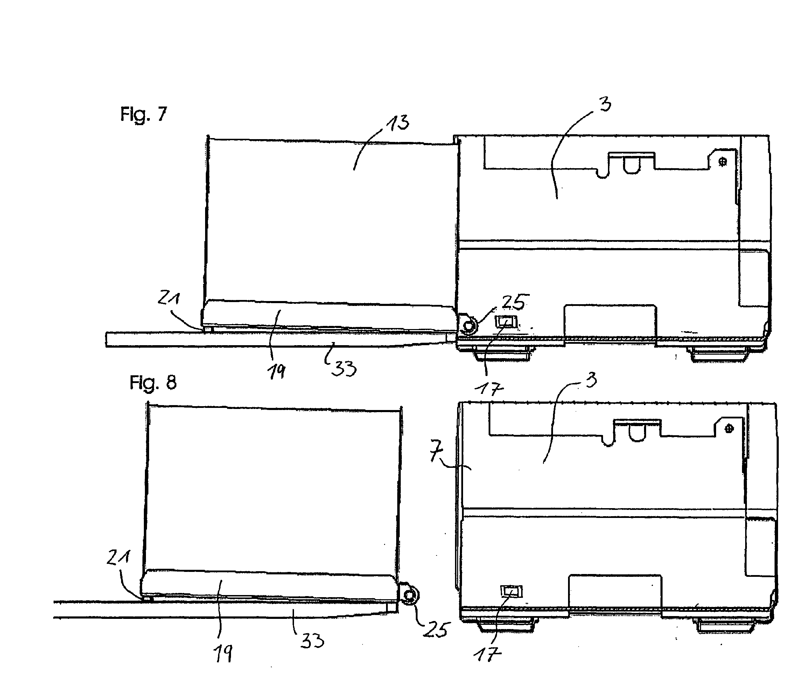

Fig. 7 zeigt schließlich eine Momentaufnahme, in der der Schubrahmen 19 mit dem darauf befindlichen Batterieblock 13 vollständig auf den Gabelzinken 33 aufgenommen ist. In Fig. 8 ist der Batterieblock 13 mit seinem Schubrahmen 19 bereits vom Batteriefach 3 entfernt.

Aus der Situation gemäß Fig. 8 heraus kann in umgekehrten Bewegungsabläufen der Gabelzinken 33 der Batterieblock 13 mit seinem Schubrahmen 19 wieder in das Batteriefach 3 eingeführt werden, um schließlich wieder den Zustand gemäß Fig. 3 herzustellen.

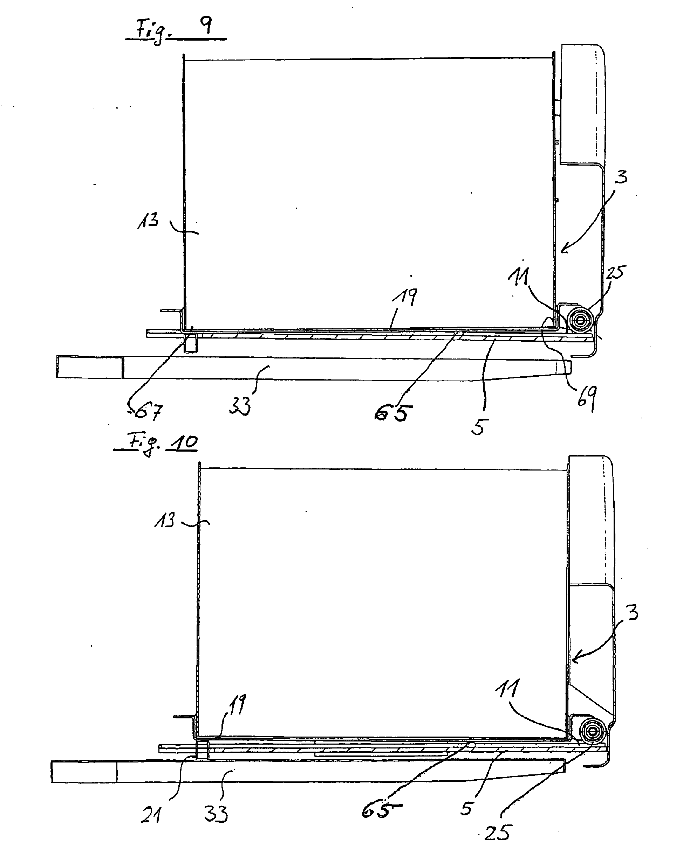

Unter Bezugnahme auf die Fig. 9 und 10 wird nachstehend noch auf eine mögliche Maßnahme zur Entlastung der Rollen 25 hingewiesen. Hierbei handelt es sich um eine Kippleiste 65, die sich in Fahrzeuglängsrichtung im hinteren Bereich des Batteriefachs 3 zwischen den Führungsschienen 11 erstreckt. Die Kippleiste 65 kann fixiert an dem Batteriefachboden vorgesehen sein und von diesem nach oben hin abstehen. Sie kann alternativ jedoch auch an der Unterseite des Schubrahmens 19 (oder bei Ausführungsformen ohne Schubrahmen an der Unterseite des Batterieblocks) vorgesehen sein und nach unten hin davon abstehen. Jedenfalls befindet sich die Leiste bei im Batteriefach 3 befindlichem Batterieblock 13 zwischen dem Batteriefachboden 5 und dem Batterieblock 13 bzw. dessen Schubrahmen 19 im hinteren Bereich des Batteriefachs, so dass der Batterieblock 13 mit seinem zweiten Ende bei 67 in Fig. 9 aufgrund der Schwerkraft nach unten zum Batteriefachboden 5 kippt, wenn der Batterieblock vollständig auf dem Batteriefachboden 5 abgesetzt wird. Das gegenüberliegende erste Ende 69 des Batterieblocks 13 wird dabei um die von der Kippleiste 65 definierte Kippachse nach oben verschwenkt, so dass die Rollen 25 von dem Batteriefachboden 5 und der Führungsschiene 11 freikommen und daher entlastet werden, da sie das Batterieblockgewicht nicht mehr am Batteriefachboden 5 abstützen müssen. In der in Fig. 9 gezeigten Ruhelage des Batterieblocks 13 im Batteriefach 3 steht der Schubrahmen 19 des Batterieblocks 13 somit in der Nähe des zweiten Endes 67 unmittelbar auf dem Batteriefachboden 5 - und im Übrigen auf der Kippleiste 65 auf.

In Fig. 10 ist die Situation gezeigt, dass die Gabelzinken 33 eines Gabelhubwagens die Hubanschlagsleiste 21 des Schubrahmens 19 anhebend untergreifen, so dass der Batterieblock 13 in Fig. 10 im Uhrzeigersinn um die Kippleiste 65 herum verschwenkt wird. Die Rollen 25 übernehmen dabei wieder die Abstützung des Batterieblocks 13 am Batteriefachboden 5, so dass durch Zurückbewegen der die Hubanschlagsleiste 21 stützenden Gabelzinken 33 der Batterieblock 13 aus dem Batteriefach 3 herausgezogen werden kann, wobei die Rollen 25 an ihren Führungsschienen 11 laufen und abrollen.

## Patentansprüche

1. Flurförderzeug, insbesondere Gabelstapler, mit einem auswechselbaren Batterieblock (3) und einem den Batterieblock (13) aufnehmenden Batteriefach (3), wobei das Batteriefach (3) mindestens eine seitliche Zugriffsöffnung (7) zum Einschieben des Batterieblocks (13) mit einem ersten Ende voraus in das Batteriefach (3) und zum Herausziehen des Batterieblocks (13) mit seinem ersten Ende hintan aus dem Batteriefach (3) aufweist, **dadurch gekennzeichnet, dass** der im Batteriefach (3) aufgenommene Batterieblock (13) in der Nähe seines ersten Endes mit wenigstens einem Rollkörper (25) oder Gleitkörper auf dem Batteriefachboden (5) abstützbar ist, derart, dass er unter Beibehaltung dieser Abstützung beim Herausziehen aus dem Batteriefach (3) in Auszugsrichtung verschiebbar ist, und dass ein von dem Batterieblock (13) an dessen dem ersten Ende entgegengesetzten zweiten Ende über einen nahe der Zugriffsöffnung (7) liegenden vorderen Randabschnitt (29) des Batteriefachbodens (5) hinweg und über die Unterseite des Batteriefachbodens (5) hinaus nach unten abstehender Vorsprung (21) als Hubanschlag für ein Batterietransportgerät (33), insbesondere Gabelhubgerät, zum Anheben und Herausziehen des Batterieblocks (13) aus dem Batteriefach (3) vorgesehen ist.

2. Flurförderzeug nach Anspruch 1, **gekennzeichnet durch** einen den Batterieblock (13) tragenden und gemeinsam mit dem Batterieblock (13) aus dem Batteriefach (3) entfernbaren bzw. gemeinsam mit dem Batterieblock (13) in das Batteriefach einschiebbaren Schubrahmen (19), der den Rollkörper (25) und den Hubanschlag (21) aufweist.

3. Flurförderzeug nach Anspruch 2, **dadurch gekennzeichnet, dass** der Batterieblock (13) außerhalb des Batteriefaches (3) vom Schubrahmen (19) bedarfsweise entfernbar ist.

4. Flurförderzeug nach Anspruch 1, **dadurch gekennzeichnet, dass** der Rollkörper und der Hubanschlag unmittelbar am Batterieblockgehäuse angeordnet sind.

5. Flurförderzeug nach einem der vorhergehenden Ansprüche, **dadurch gekennzeichnet, dass** der Hubanschlag (21) eine unterhalb des Batterieblocks (13) verlaufende Leiste ist, die sich quer zur Batterieeinschubrichtung bei Einbringen des Batterieblockes (13) in das Batteriefach (3) erstreckt.

6. Flurförderzeug nach einem der vorhergehenden Ansprüche, **dadurch gekennzeichnet, dass** der Batteriefachboden (5) nahe der Zugriffsöffnung (7) einen Ausschnitt (9) hat, der den vorderen Randabschnitt (29) des Batteriefachbodens (5) aufweist, so dass der den Hubanschlag (21) für das Batterietransportgerät (33) bildende Vorsprung bei in dem Batteriefach (3) befindlichem Batterieblock (13) durch den Ausschnitt (9) hindurch nach unten über die Unterseite des Batteriefachbodens (5) hinaus absteht.

7. Flurförderzeug nach einem der vorhergehenden Ansprüche, **dadurch gekennzeichnet, dass** als Rollkörper (25) wenigstens zwei Rollen für den Batterieblock (13) an dessen erstem Ende mit seitlichem Abstand voneinander vorgesehen sind, wobei der Batteriefachboden (5) in Batterieeinschubrichtung verlaufende Führungsbahnen (11) für die Rollen (25) aufweist.

8. Flurförderzeug nach Anspruch 7, **dadurch gekennzeichnet, dass** die Führungsbahnen (11) gegenüber dem Batteriefachboden (5) erhabene Führungsprofile aufweisen und dass die Rollen (25) am Rollenumfang umlaufende konkave Führungsrillen haben, in welche die Führungsprofile der Führungsbahnen (11) beim Einschieben des Batterieblocks (13) in das Batteriefach (3) und beim Herausziehen des Batterieblocks (13) aus dem Batteriefach (3) eingreifen.

9. Flurförderzeug nach einem der vorhergehenden Ansprüche, **dadurch gekennzeichnet, dass** das Batteriefach (3) seitliche Führungselemente (17) für den Batterieblock (13) aufweist.

10. Flurförderzeug nach Anspruch 9, **dadurch gekennzeichnet, dass** die seitlichen Führungselemente (17) stationär gehaltene (3) drehbar gelagerte Rollen umfassen.

11. Flurförderzeug nach einem der vorhergehenden Ansprüche, **dadurch gekennzeichnet, dass** das Batteriefach (3) Anschlagmittel (35) aufweist, die den Batterieblock (13) beim Herausziehen aus dem Batteriefach (3) stoppen, bevor der wenigstens eine Rollkörper (25) beim Herausrollen den Batteriefachboden (5) verlässt, wobei die Anschlagmittel (35) durch weiteres Anheben und Herausziehen des Batterieblockes (13) aus dem Batteriefach (3) überwindbar sind.

## Claims

1. An industrial truck, in particular a forklift truck, with an exchangeable battery block (3) [sic] and a battery compartment (3) which accommodates the battery block (13), wherein the battery compartment (3) has at least one lateral access opening (7) for sliding the battery block (13) with a first end foremost into the battery compartment (3) and for withdrawing the battery block (13) with its first end rearmost out of the battery compartment (3), **characterised in that** the battery block (13) accommodated in the battery compartment (3) can be supported in the vicinity of its first end with at least one roller body (25) or sliding member on the battery compartment bottom (5) so that, while still being supported in this way, it can slide in the withdrawal direction upon being withdrawn from the battery compartment (3), and **in that** a projection (21) at the first end opposite the second end of the battery block, which projects downward over a front edge section (29) of the battery compartment bottom (5) situated near the access opening (7) and beyond the underside of the battery compartment bottom (5), is provided as a lifting abutment for a battery transport device (33), in particular a forklift device, for lifting and withdrawing the battery block (13) out of the battery compartment (3).

2. An industrial truck according to Claim 1, **characterised by** a push frame (19) which carries the battery block (13) and can be removed together with the battery block (13) from the battery compartment (3) and/or can slide into the battery compartment together with the battery block (13) and which has the roller body (25) and the lifting abutment (21) .

3. An industrial truck according to Claim 2, **characterised in that**, if necessary, the battery block (13) can be removed from the push frame (19) outside the battery compartment (3).

4. An industrial truck according to Claim 1, **characterised in that** the roller body and the lifting abutment are arranged directly on the battery block housing.

5. An industrial truck according to any one of the preceding Claims, **characterised in that** the lifting abutment (21) is a strip which runs under the battery block (13) and extends transversely to the sliding-in direction of the battery when the battery block (13) is inserted into the battery compartment (3).

6. An industrial truck according to any one of the preceding Claims, **characterised in that** the battery compartment bottom (5) has near the access opening (7) a recess (9) which has the front edge section (29) of the battery compartment bottom (5) so that the projection forming the lifting abutment (21) for the battery transport device (33) projects through the recess (9) downward beyond the underside of the battery compartment bottom (5) when the battery block (13) is situated in the battery compartment (3).

7. An industrial truck according to any one of the preceding Claims, **characterised in that** as roller bodies (25) there are provided at least two rollers for the battery block (13) on its first end and spaced laterally apart from one another, wherein the battery compartment bottom (5) has guide tracks (11) for the rollers (25) extending in the insertion direction of the battery.

8. An industrial truck according to Claim 7, **characterised in that** the guide tracks (11) have guide profiles which are raised relative to the battery compartment bottom (5), and **in that** the rollers (25) have concave guide grooves extending around the roller circumference, into which the guide profiles of the guide tracks (11) engage when the battery block (13) is slid into the battery compartment (3) and when the battery block (13) is withdrawn from the battery compartment (3).

9. An industrial truck according to any one of the preceding Claims, **characterised in that** the battery compartment (3) has lateral guide elements (17) for the battery block (13).

10. An industrial truck according to Claim 9, **characterised in that** the lateral guide elements (17) comprise stationary (3) rotatably mounted rollers.

11. An industrial truck according to any one of the preceding Claims, **characterised in that** the battery compartment (3) has abutment means (35) which stop the battery block (13) when it is withdrawn from the battery compartment (3) before the at least one roller (25) leaves the battery compartment bottom (5) upon rolling out, wherein the abutment means (35) can be overcome by further lifting and withdrawal of the battery block (13) out of the battery compartment (3).

## Revendications

1. Chariot de manutention, en particulier empileuse à fourche, avec un bloc de batterie remplaçable (13) et un compartiment de batterie (3) contenant le bloc de batterie (13), dans lequel le compartiment de batterie (3) présente au moins une ouverture d'accès latérale (7) pour l'introduction du bloc de batterie (13) avec une première extrémité en avant dans le compartiment de batterie (3) et pour l'extraction du bloc de batterie (13) avec sa première extrémité en arrière hors du compartiment de batterie (3), **caractérisé en ce que** le bloc de batterie (13) contenu dans le compartiment de batterie (3) peut être appuyé sur le fond du compartiment de batterie (5) au voisinage de sa première extrémité avec au moins un corps de roulement (25) ou un corps de glissement, de telle manière qu'il soit déplaçable dans la direction d'extraction en conservant cet appui lors de l'extraction hors du compartiment de batterie (3), et **en ce qu'**il est prévu une saillie (21) saillante vers le bas à partir du bloc de batterie (13) sur la deuxième extrémité de celui-ci opposée à la première extrémité par-dessus une partie de bord (29) du fond du compartiment de batterie (5) située à proximité de l'ouverture d'accès (7) et au-delà du côté inférieur du fond du compartiment de batterie (5) comme butée de levage pour un appareil de transport de batterie (33), en particulier un appareil de levage à fourche, pour soulever et extraire le bloc de batterie (13) hors du compartiment de batterie (3).

2. Chariot de manutention selon la revendication 1, **caractérisé par** un cadre coulissant (19) portant le bloc de batterie (13) et pouvant être retiré hors du compartiment de batterie (3) en même temps que le bloc de batterie (13) ou pouvant être introduit dans le compartiment de batterie en même temps que le bloc de batterie (13), et qui présente le corps de roulement (25) et la butée de levage (21).

3. Chariot de manutention selon la revendication 2, **caractérisé en ce que** le bloc de batterie (13) peut au besoin être retiré hors du cadre coulissant (19) à l'extérieur du compartiment de batterie (3).

4. Chariot de manutention selon la revendication 1, **caractérisé en ce que** le corps de roulement et la butée de levage sont disposés directement sur le boîtier du bloc de batterie.

5. Chariot de manutention selon l'une quelconque des revendications précédentes, **caractérisé en ce que** la butée de levage (21) est une latte s'étendant en dessous du bloc de batterie (13), qui s'étend transversalement à la direction d'introduction de la batterie lors de l'introduction du bloc de batterie (13) dans le compartiment de batterie (3).

6. Chariot de manutention selon l'une quelconque des revendications précédentes, **caractérisé en ce que** le fond du compartiment de batterie (5) comporte à proximité de l'ouverture d'accès (7) une découpe (9), qui présente la partie de bord avant (29) du fond du compartiment de batterie (5), de telle façon que la saillie formant la butée de levage (21) pour l'appareil de transport de batterie (33) soit saillante à travers la découpe (9) vers le bas au-delà du côté inférieur du fond du compartiment de batterie (5) lorsque le bloc de batterie (13) est dans le compartiment de batterie (3).

7. Chariot de manutention selon l'une quelconque des revendications précédentes, **caractérisé en ce qu'**il est prévu comme corps de roulement (25) au moins deux rouleaux pour le bloc de batterie (13) à une distance latérale l'un de l'autre sur sa première extrémité, dans lequel le fond du compartiment de batterie (5) présente des voies de guidage (11) s'étendant dans la direction d'introduction de la batterie pour les rouleaux (25).

8. Chariot de manutention selon la revendication 7, **caractérisé en ce que** les voies de guidage (11) présentent des profils de guidage surélevés par rapport au fond du compartiment de batterie (5) et **en ce que** les rouleaux (25) sont munis sur la périphérie des rouleaux de rainures de guidage périphériques concaves, dans lesquelles les profils de guidage des voies de guidage (11) s'engagent lors de l'introduction du bloc de batterie (13) dans le compartiment de batterie (3) et lors de l'extraction du bloc de batterie (13) hors du compartiment de batterie (3).

9. Chariot de manutention selon l'une quelconque des revendications précédentes, **caractérisé en ce que** le compartiment de batterie (3) présente des éléments de guidage latéraux (17) pour le bloc de batterie (13).

10. Chariot de manutention selon la revendication 9, **caractérisé en ce que** les éléments de guidage latéraux (17) comprennent des rouleaux montés de façon rotative et maintenus en position stationnaire (3).

11. Chariot de manutention selon l'une quelconque des revendications précédentes, **caractérisé en ce que** le compartiment de batterie (3) présente des moyens de butée (35), qui bloquent le bloc de batterie (13) lors de l'extraction hors du compartiment de batterie (3), avant que ledit au moins un corps de roulement (25) quitte en sortant le fond du compartiment de batterie (5), dans lequel les moyens de butée (35) peuvent être surmontés par un nouveau soulèvement et une nouvelle extraction du bloc de batterie (13) hors du compartiment de batterie (3).
